# FASCICULE DE BREVET EUROPEEN

(11) **EP 1 984 727 B1**
(45) Date de publication et mention de la délivrance du brevet: **09.08.2017**
(21) Numéro de dépôt: 07731628.9
(22) Date de dépôt: 15.02.2007
(51) Int. Cl.: G01N 25/18

(54) **PROCEDE ET DISPOSITIF DE CARACTERISATION, PAR PYROMETRIE ACTIVE, D'UN MATERIAU EN COUCHE MINCE DISPOSE SUR UN SUBSTRAT**
VERFAHREN UND VORRICHTUNG ZUR CHARAKTERISIERUNG EINES DÜNNFILMMATERIALS AUF EINEM SUBSTRAT MITTELS AKTIVER PYROMETRIE
METHOD AND DEVICE FOR CHARACTERIZING, USING ACTIVE PYROMETRY, A THIN-LAYER MATERIAL ARRANGED ON A SUBSTRATE

(30) Priorité: 17.02.2006 FR 0601471
(43) Date de publication de la demande: 29.10.2008
(73) Titulaire: Commissariat à l'Energie Atomique ( CEA), 75015 Paris (FR)
(72) Inventeur: THRO, Pierre-Yves, F-91190 Gif-sur-Yvette (FR); BRYGO, Francois, F-13010 Marseille (FR); FOMICHEV, Sergey, F-Palaiseau 91120 (FR); SEMEROK, Alexandre, F-91120 Palaiseau (FR)
(74) Mandataire: Ipside
(86) Numéro de dépôt international: PCT/FR2007/050803
(87) Numéro de publication internationale: WO 2007/093744

(56) Documents cités:
- WO-A-01/44752
- DE-A1- 19 520 788
- FR-A1- 2 647 547
- US-A- 5 957 581
- US-A1- 2002 031 164
- US-A1- 2005 023 136

## Description

La présente invention concerne un procédé selon la revendication 1 de caractérisation d'un bloc de matériau comprenant au moins une couche mince disposée sur un substrat de plus grande épaisseur.

L'invention concerne également un dispositif selon la revendication 9 pour la mise en oeuvre du procédé.

Dans le cadre de l'invention, on entend par « caractérisation » l'analyse de propriétés physiques prédéterminées du matériau en couche mince par l'intermédiaire de la mesure de l'émission thermique de la surface de ce matériau chauffé à l'aide d'un système de chauffage à laser.

Toujours dans le cadre de l'invention, il doit être entendu que la couche mince de matériau peut être constituée d'une couche unique (monocouche) ou mais aussi de plusieurs couches superposées (multicouche).

L'invention trouve des applications dans de nombreux domaines. De façon non exhaustive, on peut citer la caractérisation des propriétés physiques de dépôts de matériaux, de couches minces, de couches d'oxydes et la caractérisation des impuretés présentes sur des surfaces de matériaux.

Comme il est bien connu, un matériau, quel qu'il soit émet un rayonnement électromagnétique, dont l'intensité en fonction de la longueur d'onde dépend de sa température. Cette intensité est décrite par la loi de Planck.

Des méthodes de mesure du rayonnement électromagnétique émis par le matériau et permettant d'en déduire sa température ont été développées depuis longtemps. On peut qualifier ces méthodes de mesure « passive », puisqu'on se contente de mesurer la température du matériau pour en déduire des caractéristiques physiques prédéterminées.

Ces méthodes présentent l'avantage d'être non intrusives, car elles ne nécessitent pas un contact physique entre un appareil de mesure et le matériau.

*A contrario,* il a été proposé d'autres procédés de mesure de température nécessitant un contact entre un appareil de mesure et le matériau. On peut citer, à titre d'exemple, l'utilisation de thermocouples. Ce type de mesure présente d'autres inconvénients. En particulier, la mesure ne peut être effectuée sans préparation au préalable du bloc de matériau.

On a également proposé dans l'Art Connu, des procédés de mesure améliorés du type « sans contact » précité, notamment un procédé de mesure par pyrométrie dite « active ». Un tel procédé consiste à chauffer un bloc de matériau à l'aide d'une source de chaleur, par exemple un laser, et à mesurer la radiation du corps qui résulte de l'échauffement pour en déduire sa température. La radiation est analysée au moyen d'un dispositif de collecte du rayonnement électromagnétique, d'un capteur convertissant l'énergie électromagnétique en signaux électriques et d'un système électronique de traitement du signal. L'analyse de la température et de son évolution temporelle permet de déduire certaines propriétés physiques du matériau, par exemple sa conductivité thermique, son absorptivité, ou, dans le cas d'un échantillon de matériau multicouches, l'épaisseur de couche et la résistance thermique entre deux couches.

De tels procédés d'analyses de propriétés physiques de matériaux par la mesure de température par pyrométrie active sont connus depuis de nombreuses années.

On peut citer, à titre d'exemples non exhaustifs, les procédés suivantes :
La demande de brevet français FR 2 593 917 A1 (UNIVERSITE DE REIMS-CHAMPAGNE-ARDENNE) décrit un procédé permettant la mesure de l'absorptivité, de la diffusivité et de la résistance thermique entre deux couches de matériau. L'échantillon de matériau est constitué d'une couche mince, transparente à la longueur d'onde du rayonnement électromagnétique, disposée sur un substrat épais. Le substrat est chauffé à l'aide d'un faisceau laser modulé en amplitude à une fréquence haute et à une fréquence basse. L'émission thermique du substrat est ensuite mesurée. L'analyse de la différence de phase entre l'émission thermique et le signal laser permet de déterminer les propriétés physiques de la couche mince transparente.

La demande de brevet français FR 2 647 547 A1 (UNIVERSITE DE REIMS-CHAMPAGNE-ARDENNE) décrit un procédé de mesure de la résistance thermique de contact entre deux couches opaques aux rayonnements laser. La surface de l'échantillon de matériau est chauffée à l'aide d'un faisceau laser modulé, et l'analyse de la composante modulée de la température de surface permet de déterminer la valeur du contact thermique entre les deux couches. Toutefois, ce procédé nécessite un étalonnage préalable effectué sur un ensemble d'échantillons tests représentatifs des matériaux à analyser.

La demande de brevet français FR 2 663 745 A1 (UNIVERSITE DE REIMS-CHAMPAGNE-ARDENNE) décrit un procédé similaire à celui de la demande de brevet précédent. Toutefois la modulation du faisceau laser est obtenue à l'aide d'un signal binaire pseudo-aléatoire.

Les procédés qui viennent d'être rappelés mettent en oeuvre des faisceaux lasers modulés. D'autres procédés sont décrits dans la littérature en appliquant un signal de chauffage pulsé, c'est-à-dire en utilisant par exemple un laser émettant des impulsions courtes (quelques nanosecondes) de forte intensité. Ces caractéristiques présentent plusieurs avantages. En premier lieu, l'élévation de température qui en résulte est plus importante, ce qui permet d'obtenir un rayonnement électromagnétique de la surface d'intensité également plus importante, et ainsi une meilleure précision dans la mesure en augmentant le rapport signal sur bruit. En outre, la température du matériau étant élevée, cette technique permet de s'affranchir de phénomènes d'interférences avec la température ambiante.

Enfin, on a également proposé dans l'Art Connu, pour un procédé de pyrométrie active, l'utilisation d'un faisceau laser modulé et impulsionnel. Un tel procédé a été décrit, par exemple, par T. Loarer dans la thèse de doctorat intitulée : « Mesure de température de surface par effet photothermique modulé ou impulsionnel », Ecole Centrale Paris, (1989).

Ce procédé a fait l'objet d'une demande de brevet israélien, déposée sous le N° IL 1996118611, et à laquelle correspond le brevet US 5 957 581 (Katzir et al.).

Ces documents décrivent un procédé de mesure de température de surface, à partir de l'analyse de la forme temporelle de la décroissance de la température après un tir laser, sans prendre en compte la valeur de la température maximale. Ce procédé présente l'avantage, notamment, de pouvoir s'affranchir des problèmes d'étalonnage *in situ* de l'appareil de mesure.

Les procédés de l'Art Connu qui viennent d'être rappelés présentent, certes, des avantages mais ne satisfont pas entièrement à tous les besoins qui se font sentir dans les domaines d'applications visés par l'invention. En outre, si le dernier procédé décrit semble, *a priori,* le plus intéressant, il y lieu de constater que, la mise en oeuvre de celui-ci n'est pas aisée pour l'analyse des épaisseurs de couches de matériau de l'ordre de quelques micromètres. En effet, en chauffant le matériau à l'aide d'un laser impulsionnel, seule une fine épaisseur de matériau proche de la surface est effectivement chauffée, et les influences de l'épaisseur de la couche mince superficielle et du contact thermique entre cette couche superficielle et un substrat ne peuvent pas être facilement mises en évidence. Enfin, le chauffage par faisceau laser modulé permet certes de mesurer les propriétés physiques d'échantillons de matériau multicouches, mais ce procédé souffre d'un rapport « signal sur bruit » faible.

L'invention vise, tout à la fois, à pallier les inconvénients des procédés de l'Art Connu, dont certains viennent d'être rappelés, et de répondre aux besoins qui se font sentir dans le domaine.

En effet, l'invention permet d'obtenir à la fois un très bon rapport « signal sur bruit », permettant ainsi d'obtenir des informations prédéterminées sur la seule couche superficielle, telle sa diffusivité thermique et sa densité, et de chauffer le matériau sur une épaisseur suffisante pour que toute l'épaisseur de la couche mince superficielle, et/ou le contact thermique entre les deux couches soient effectivement concernés.

Pour ce faire, selon une caractéristique importante, l'invention met en oeuvre un laser pulsé, à haute cadence de tirs pour échauffer la surface d'un bloc de matériau multicouches. Ce bloc de matériau comprend une ou plusieurs couche(s) de faibles épaisseurs que l'on appellera ci-après « couche(s) superficielle(s) ». Les couches superficielles, disposées sur une couche plus épaisse que l'on appellera ci-après « substrat », sont soumises au rayonnement laser pulsé et l'absorbent. *A priori,* la valeur du contact thermique entre le substrat et les couches superficielles peut être quelconque, voire nulle.

Selon une caractéristique importante de l'invention encore, on choisit une cadence de tir, c'est-à-dire une fréquence de répétition des impulsions, suffisamment élevée pour que l'on puisse obtenir une accumulation de chaleur, tir après tir, dans la couche de matériau superficiel. En effet, dans ce cas le matériau chauffé n'a pas le temps de se refroidir entièrement entre deux tirs successifs.

Selon une caractéristique importante encore, l'échauffement du matériau pendant un seul tir permet d'obtenir des informations sur la couche superficielle du matériau, c'est-à-dire dans le volume qui absorbe le rayonnement laser.

Selon une caractéristique importante encore, l'accumulation de chaleur due à une salve de tirs successifs permet d'obtenir des informations sur des zones situées à des épaisseurs plus profondes.

Selon une caractéristique importante encore, l'évolution de la radiation de la surface du matériau permet de déterminer l'évolution de la température qui est analysée à l'aide d'un modèle numérique établi à partir de l'équation de la chaleur et des conditions aux limites propres au matériau à analyser. Pour ce faire, on peut avoir recours à des outils mathématiques bien connus de l'Homme de Métier.

L'invention a donc pour objet principal un procédé de caractérisation d'un bloc de matériau par pyrométrie active, ledit bloc de matériau comprenant au moins deux couches superposées, une couche superficielle de faible épaisseur disposée sur un substrat épais, ladite couche superficielle étant portée à une température initiale déterminée, caractérisé en ce qu'il comprend au moins les étapes suivantes :
- une première étape consistant à chauffer au moins une zone déterminée de la surface de ladite couche superficielle de matériau à l'aide d'une salve d'impulsions laser, la fréquence de répétition desdites impulsions laser étant choisie suffisamment élevée et leur durée suffisamment courte pour que le matériau de ladite couche superficielle subisse une pluralité de cycles thermiques consistant en une élévation rapide de température lorsqu'il est exposé aux dites impulsions laser, suivie d'une décroissance lente de température entre deux impulsions laser, ne permettant pas de revenir à ladite température initiale, et pour qu'il accumule de la chaleur d'un cycle thermique au suivant ;
- un deuxième étape consistant à collecter tout ou partie du rayonnement thermique émis par la surface dudit matériau ;
- une troisième étape consistant à mesurer au moins une partie de dudit rayonnement thermique collecté à l'aide d'un capteur ;
- une quatrième étape consistant en la détermination de la température de la dite surface à partir dudit rayonnement thermique mesuré par ledit capteur et traité par un système d'acquisition et de traitement du signal ; et
- une cinquième étape consistant à analyser des régimes temporels prédéterminés en comparant les mesures acquises par le système d'acquisition et de traitement du signal avec des valeurs théoriques données par l'équation de la chaleur adaptée aux caractéristiques physiques dudit matériau, et en faisant correspondre ces deux séries de valeurs en faisant varier au moins un paramètre physique associé au dit matériau, de manière à en dériver des propriétés thermo-physiques prédéterminées permettant ladite caractérisation de la couche superficielle.

L'invention a encore pour objet un dispositif pour la mise en oeuvre du procédé.

D'autres caractéristiques et avantages de l'invention apparaîtront dans la description détaillée qui suit, à l'aide des figures annexées, parmi lesquelles :
- la figure 1 illustre schématiquement un exemple de réalisation d'un dispositif pour la mise en oeuvre du procédé selon l'invention ;
- la figure 2 représente des courbes illustrant l'évolution de la température de couches minces de matériaux de différentes épaisseurs soumises à une pluralité de tirs laser successifs à cadence élevée ; et
- la figure 3 représente des courbes illustrant l'évolution de la température de couches minces de matériaux soumises à une pluralité de tirs laser successifs à cadence élevée, lesdites couches étant disposées sur un substrat épais et présentant des contacts thermiques avec ce substrat de différentes valeurs.

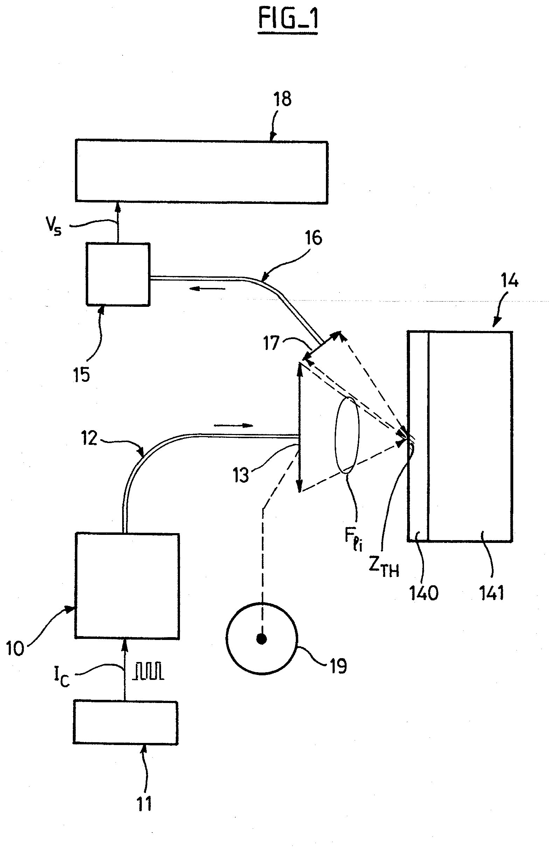

La figure 1 illustre schématiquement un exemple de réalisation d'un dispositif pour la mise en oeuvre du procédé selon l'invention.

Le dispositif 1 comprend comme source chaleur un laser 10, par exemple du type « Nd : YAG » (dopé Neodyme), pompé par diodes. Sa fréquence est doublée en utilisant un cristal non-linéaire de KTP (phosphate de titanyle de potassium), non représenté sur la figure 1. Pour fixer les idées, dans un mode de réalisation pratique, la longueur d'onde est de 532 nm, avec une durée d'impulsion typique de 90 ns. Le laser 10 fonctionne avec une cadence de tir élevée, préférentiellemnt à la fréquence 10 kHz, mais peut être située dans une gamme typique de 1kHz à 30 kHz. Pour ce faire, des circuits électroniques classiques 11 génèrent des impulsions de commande *I_{C}* transmises au laser 10. Avantageusement, le faisceau laser est injecté dans une fibre optique multimode 12, ce qui permet d'homogénéiser le profil spatial de l'intensité optique. En sortie, la fibre optique 12 est couplée à une ou plusieurs lentilles optiques, dont une seule 13 a été représentée sur la figure 1. La lentille 13 est disposée de telle sorte qu'elle permette d'obtenir, sur la surface d'un bloc de matériau 14, un faisceau incident *Fₗᵢ* homogène en intensité, focalisé sur une zone de chauffage *Z_{TH},* de surface variant typiquement entre 0,2 et 5 mm², avec une fluence comprise entre 0,01 et 4 J.cm⁻². Le faisceau laser incident *Fₗᵢ* permet de chauffer la surface du bloc de matériau 14. Ce bloc de matériau 14 dont on souhaite connaître des propriétés thermo-physiques prédéterminées, est composé d'au moins deux couches : une couche superficielle 140, de faible épaisseur, et un substrat 141, de grande épaisseur comparée à celle de la couche superficielle 140. l'épaisseur de la couche 140 est située typiquement dans une gamme de 0,1 µm à 900 µm.

Sans sortir du cadre de l'invention, le bloc de matériau 14 peut comprendre plusieurs couches superficielles superposées de faibles épaisseurs.

La mesure de la température est réalisée à l'aide d'un capteur 15, sensible dans une gamme de longueurs d'onde du rayonnement thermique permettant d'obtenir suffisamment de signal mais cette gamme étant suffisamment éloignée de la longueur d'onde émise par le laser 10 afin que cette dernière ne perturbe pas la mesure. De plus, ce capteur 15 a un temps de réponse très inférieur au temps entre deux tirs consécutifs. Ce capteur 15 convertit le rayonnement thermique en signaux électriques de sortie *V_{S}* transmis à un système d'acquisition et de traitement de signal 18. Le système d'acquisition et de traitement du signal 18 permet de déduire la température grâce à des méthodes connues de l'Homme du Métier. Dans le mode de réalisation décrit sur la figure 1, le capteur 15 est couplé à une fibre optique 16, elle-même couplée en entrée à une ou plusieurs lentilles optiques, dont une seule, 17, a été représentée. La lentille optique 17 collecte les radiations émises par la surface du bloc 14. Dans une variante (non représenté), l'ensemble « capteur 15 - système d'acquisition et de traitement du signal 18 » peut être remplacé par un pyromètre. Dans un exemple de réalisation pratique, on utilise un pyromètre de la marque Kleiber®, type C-LWL, sensible dans une gamme de longueurs d'onde comprises entre 1,58 et 2,2 µm. Cet appareil de mesure est équipé d'un objectif qui permet de collecter une partie de la radiation émise par le matériau sous test.

Dans un mode préféré, le système d'acquisition et de traitement de signal 18 est réalisé en faisant appel à un système informatique 18, à programme enregistré, comprenant des cartes spécifiques d'acquisition recevant les signaux convertis par le capteur 15 et associées au logiciel LabVIEW® (pour « Laboratory Virtual Instrument Engineering Workbench »). Un tel mode opératoire est bien connu, en soi, par l'Homme de Métier et il n'est pas utile de le décrire plus avant. L 'analyse de la température peut être effectuée à l'aide d'un logiciel spécialisé, par exemple le logiciel de calcul interactif disponible dans le commerce MATLAB® qui permet d'effectuer des simulations numériques basées sur des algorithmes d'analyse numérique. Dans le cadre de l'invention, ce logiciel permet de résoudre l'équation de la chaleur dans le milieu sous test concerné, en considérant une source de chaleur interne représentant le chauffage par l'impulsion laser. Des paramètres thermo-physiques telles que l'épaisseur de la couche, la résistance thermique entre les deux couches, la diffusivité thermique, le coefficient d'absorption et/ou la densité du matériau sont variables, et peuvent être ajustés en fonction de résultats expérimentaux.

En soi, la réalisation d'un programme de calcul qui fait appel à un tel logiciel est une opération à la portée de l'Homme de Métier. De nouveau, il est inutile de la détailler plus avant. Préférentiellement, le chauffage et la mesure de la radiation sont réalisés en atmosphère contrôlée, par exemple sous atmosphère d'azote, d'argon ou sous vide. Dans une variante de réalisation supplémentaire (non représentée), on peut projeter un jet de gaz sur la surface du matériau (couche superficielle 140), afin d'éviter toute influence de l'atmosphère ambiant sur la surface chauffée. Afin d'obtenir une cartographie des propriétés thermo-physiques de la couche superficielle, le chauffage du matériau peut aussi être obtenu à l'aide d'un faisceau laser balayé sur la surface sous la commande d'un dispositif de balayage de type galvanométrique, par exemple à base d'un moteur 19 couplé mécaniquement à un ensemble d'éléments optiques 13 (miroirs et lentilles) disposées sur un axe de rotation. Dans ce mode de réalisation, la lentille optique 17 permettant de collecter le rayonnement thermique doit se déplacer de manière à toujours collecter le rayonnement thermique issue de la zone chauffée par le laser. Afin d'obtenir une cartographie des propriétés thermo-physiques de la couche superficielle, la surface du matériau 14 peut aussi être déplacée devant l'ensemble de lentilles optiques 13.

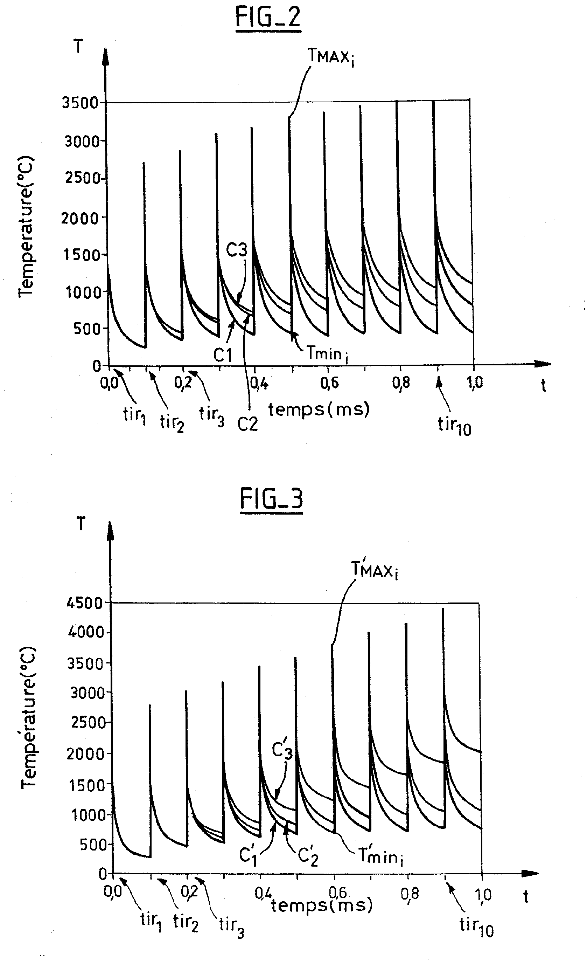

On va maintenant décrire un premier exemple de résultats obtenus par le procédé de l'invention, par référence à la figure 2.

On a supposé que le faisceau laser pulsé, à fréquence élevée, généré par le laser 10 de la figure 1, est projeté sur un bloc de matériau 14 comprenant deux couches, une couche superficielle 140 et un substrat 141. On a supposé en outre que la couche superficielle 140, de faible épaisseur, est constituée d'un matériau absorbant très fortement le rayonnement électromagnétique du faisceau généré par le laser 10 et peu diffusant thermiquement à la surface. Cette couche superficielle 140 est disposée sur un substrat épais 141 très diffusant thermiquement.

L'expérience est réitérée pour différentes épaisseurs de couches superficielles 140, à savoir 2, 3 et 4 µm dans l'exemple décrit : courbes *C*₁ à *C*₃, respectivement.

Le matériau est chauffé par les impulsions laser émises, de très faible durée (90 ns) à une cadence de tir élevée (10 kHz). Comme il a été rappelé, selon une des caractéristiques importantes de l'invention, ce choix de fréquence permet d'accumuler de la chaleur, tir après tir, car le matériau superficiel 140 n'a pas le temps de se refroidir entièrement entre chaque impulsion.

On a supposé dans l'exemple de la figure 2 que la salve de tirs comporte dix tirs successifs (impulsions laser), *tir*₁ à *tir*₁₀, se répétant après un intervalle de temps de 0,1 ms (axe horizontal des temps t gradué de 0 à 1 ms).

Les impulsions lasers, en synchronisme avec les instants 0 à 0,9 ms de l'axe des temps t de la figure 2, provoquent des montées en températures brutales, les températures successivement atteintes culminant à des valeurs *Tmaxᵢ* (typiquement comprises entre 3000 et 3500 °C : axe vertical T des températures comprises entre 0 et 3500 °C) croissant régulièrement d'un tir au suivant. Lorsque l'impulsion laser cesse, la température de la couche de matériau superficielle 140 décroît, mais beaucoup plus lentement que lors de la montée en température (refroidissement naturel) pour atteindre des valeurs minimales *Tminᵢ* (typiquement comprises entre 250 et 500 °C), qui croissent régulièrement également d'un tir au suivant.

Il est aisé de constater sur la figure 2 que l'évolution de la température sur un seul tir (le premier : *tir*₁) ne permet pas de distinguer de différences notables de comportement entre les différentes épaisseurs de couches : les courbes, *C*₁ à *C*₃, sont pratiquement confondues. Par contre, l'accumulation de chaleur, tir après tir, permet de distinguer une différence nette entre les différentes épaisseurs de couches. Dans l'exemple décrit sur la figure 2, cette différence devient tout à fait perceptible entre les courbes *C*₁ à *C*₃ à partir de la troisième impulsion : *tir*₃.

Une série supplémentaire d'expériences a été réalisée, non plus en faisant varier l'épaisseur de la couche superficielle 140, mais en choisissant une couche mince de matériau très absorbant et peu diffusant à la surface, disposée sur un matériau très diffusant thermiquement formant un substrat épais 141. Pour réaliser ces expériences, on a sélectionné trois valeurs différentes de contacts thermiques.

Les valeurs de contacts thermiques on été réparties dans trois classes, dont deux extrêmes : contacts thermiques « parfait » et « pas de contact », respectivement. On a également choisi une valeur de contact thermique « intermédiaire ». Les courbes respectives *C*'₁, *C*'₃ et *C*'₂ de la figure 3 correspondent aux trois classes précitées.

Comme précédemment, l'axe horizontal est gradué en temps *t* (de 0 à 1 ms), l'axe vertical en température *T* (de 0 à 4500 °C), et la salve de tirs comporte dix impulsions : *t*₁ à *t*₁₀, se répétant toutes les 0,1 ms et de durée égale à 90 ns.

Les températures successivement atteintes culminent à des valeurs *T'maxᵢ* (typiquement comprises entre 2500 et 4500 °C) croissant régulièrement d'un tir au suivant. Toujours de façon similaire au cas précédent, lorsque l'impulsion laser cesse, la température décroît, mais beaucoup plus lentement que lors de la montée en température pour atteindre des valeurs minimales *T'minᵢ* (typiquement comprises entre 250 et 750 °C) qui croissent régulièrement également d'un tir au suivant.

Là encore, il n'est pas possible de visualiser des différences entre les contacts thermiques de classes distinctes avec un seul tir (première impulsion *tir*₁). Les courbes, *C*'₁ à *C'*₃*,* sont pratiquement confondues. Par contre, l'accumulation de chaleur, tir après tir, permet de mettre en évidence la différence de comportement entre les différentes classes de contacts, là encore à partir de la troisième impulsion *tir*₃, dans l'exemple décrit sur la figure 3. En outre, cette différentiation devient de plus en plus importante, toujours dans l'exemple décrit, entre la classe « pas de contact » (courbe *C*'₃) et les deux autres classes (courbes *C*'₁ et *C*'₃).

Dans les deux exemples d'expérimentations qui viennent d'être décrits, il est possible d'obtenir un ensemble d'informations prédéterminées sur la couche superficielle 140 à partir de l'analyse de régimes temporels prédéterminés de chauffage et de refroidissement dudit matériau (140). L'analyse porte sur tout ou partie des régimes suivants : la mesure de l'élévation moyenne de sa température, de l'évolution temporelle de la température lors du chauffage lors de chaque cycle thermique ou sélectivement pour des cycles thermiques déterminés, de la valeur de la température moyenne atteinte à la saturation, de la valeur de la température maximale atteinte (*Tmaxᵢ*) pour chaque cycle thermique ou sélectivement pour des cycles thermiques déterminés, de la valeur de la température atteinte juste avant chaque impulsion laser ou sélectivement avant des impulsions laser déterminés, de la valeur de la température à un ou plusieurs délais temporels prédéfinis entre deux impulsions laser par rapport à l'impulsion laser précédente, de l'évolution temporelle de la température entre deux impulsions laser, de l'évolution temporelle de la température après la fin de ladite salve d'impulsions laser et/ou de la valeur de la température atteinte à un ou plusieurs délais prédéterminés après ladite salve d'impulsions laser (non représentée sur les figures 2 et 3).

Les principales étapes du procédé selon l'invention vont maintenant être décrites de façon détaillée.

Une première étape consiste à chauffer la surface d'un bloc de matériau 14 comprenant au moins deux couches différentes, une couche superficielle 140, de faible épaisseur, typiquement de l'ordre du micromètre, disposée sur un substrat épais 141 (par comparaison à l'épaisseur de la couche superficielle 140). Toutefois l'épaisseur de la couche superficielle 140 peut être supérieure ou inférieure au micromètre, sans sortir du cadre de l'invention. Le chauffage est effectué à l'aide d'un laser 10, pulsé à cadence élevée, de manière à ce que le matériau absorbe le rayonnement laser, s'échauffe et se refroidisse partiellement entre deux tirs. En effet, la cadence de tir, c'est-à-dire la fréquence de répétition des impulsions délivrées par le laser 10, est choisie de telle sorte qu'elle soit suffisamment élevée pour que la température maximale atteinte *Tmaxᵢ* ne puisse redescendre (*Tminᵢ*) jusqu'à la température initiale. Le nombre de tirs appliqué au bloc de matériau 14 peut être suffisamment élevé pour que l'élévation moyenne de température arrive à saturation et reste sensiblement constante, mais peut aussi être plus faible, selon le type de mesure à effectuer. L'énergie des impulsions laser doit être suffisamment élevée de manière à ce que le signal thermique puisse être mesuré avec un rapport signal sur bruit suffisant. La mesure devant être non destructive, il va de soi que cette énergie doit par ailleurs être suffisamment faible, de manière à ne pas endommager le matériau.

Une deuxième étape consiste à collecter tout ou partie du rayonnement thermique émis par la surface du matériau. La collecte et le transport du rayonnement peuvent être effectués à l'aide de lentilles optiques 17 et d'une fibre optique 16.

Une troisième étape consiste à mesurer au moins une partie de ce rayonnement thermique collecté à l'aide d'un capteur 15 dont la gamme spectrale de sensibilité est adaptée au rayonnement émis par la cible et à le convertir en signaux électriques.

La mesure peut, par exemple, être effectuée à l'aide d'un pyromètre, avantageusement un pyromètre multicanaux afin de s'affranchir de l'émissivité propre du matériau. Dans ce cas, les deuxième et troisième étapes peuvent être confondues en une étape unique, le pyromètre étant pourvu habituellement d'un objectif collectant le rayonnement émis par le matériau sous test.

Une quatrième étape consiste en l'analyse de régimes temporels prédéterminés de chauffage du matériau, à savoir, notamment, l'élévation moyenne de la température, l'évolution temporelle de la température lors du chauffage à chaque tir (c'est-à-dire à chaque impulsion laser) ou sélectivement pour des tirs déterminés, la valeur de la température moyenne maximale, la valeur de la température maximale *Tmaxᵢ* atteinte pour chaque tir ou sélectivement pour des tirs déterminés, la valeur de la température atteinte juste avant chaque tir, *T'minᵢ,* ou sélectivement avant des tirs déterminés, la valeur de la température à un ou plusieurs délais temporels entre deux tirs par rapport au tir précédent, l'évolution temporelle de la température entre deux tirs, l'évolution temporelle de la température après la salve de tir, et/ou la valeur de la température atteinte à un ou plusieurs délais prédéterminés après la salve de tirs.

Une cinquième étape consiste à comparer les valeurs des mesures effectuées et acquises avec des valeurs théoriques données par l'équation de la chaleur adaptée au bloc de matériau sous test, valeurs théoriques obtenues par un processus de modélisation numérique, et faire correspondre ces deux séries de valeurs en faisant varier un ou plusieurs paramètres physiques du matériau, telles que l'épaisseur de la couche superficielle, la conductivité thermique de la couche superficielle, la résistance thermique entre deux couches de matériaux, le coefficient d'absorption de la couche superficielle et/ou la densité de la couche superficielle.

La modélisation numérique peut être obtenue, comme il a été indiqué, en faisant appel à des logiciels de calcul disponibles dans le commerce, tel MATLAB® précité ou tout logiciel similaire.

De façon préférentielle, le calcul théorique du chauffage prend en compte les effets de rugosité de la surface du matériau, de chauffage inhomogène du matériau (par exemple, soit à cause d'une inhomogénéité intrinsèque du matériau, soit à cause d'une inhomogénéité de l'intensité du faisceau laser), d'interférences du faisceau dans la couche superficielle, d'épaisseur sur laquelle la température est mesurée, etc.

A la lumière de la description qui vient d'être faite, on réalise aisément que l'invention atteint bien les buts qu'elle s'est fixée.

Elle présente de nombreux avantages, notamment elle permet, à la fois, d'obtenir un très bon rapport « signal sur bruit » et de chauffer le matériau sur une épaisseur suffisante pour que toute l'épaisseur de la couche mince superficielle, et/ou le contact thermique entre deux couches soient effectivement concernés.

Elle n'est toutefois pas limitée aux seuls exemples de réalisation qui ont été explicitement décrits, par référence notamment aux figures 1 à 3.

De même, des exemples numériques précis n'ont été donnés que pour mieux mettre en évidence les caractéristiques essentielles de l'invention et ne résultent que d'un choix technologique, en soi à la portée de l'Homme de Métier, ce en fonction d'une application précise envisagée. Ils ne sauraient limiter de quelle que manière que ce soit la portée de l'invention.

## Revendications

1. Procédé de caractérisation d'un bloc (14) de matériau par pyrométrie active, ledit bloc de matériau comprenant au moins deux couches superposées, une couche superficielle (140) de faible épaisseur disposée sur un substrat (141) épais, ladite couche superficielle étant portée à une température initiale déterminée, **caractérisé en ce qu'**il comprend au moins les étapes suivantes :
- une première étape consistant à chauffer au moins une zone déterminée de la surface de ladite couche superficielle de matériau (140) à l'aide d'une salve d'impulsions laser (*tir*₁ - *tir*₁₀) la fréquence de répétition desdites impulsions laser (*tir*₁ *- tir*₁₀) étant choisie suffisamment élevée et leur durée suffisamment courte pour que le matériau de ladite couche superficielle (140) subisse une pluralité de cycles thermiques consistant en une élévation rapide de température lorsqu'il est exposé aux dites impulsions laser (*tir*₁ - *tir*₁₀), suivie d'une décroissance lente de température entre deux impulsions laser, ne permettant pas de revenir à ladite température initiale, et pour qu'il accumule de la chaleur d'un cycle thermique au suivant de sorte que le matériau est chauffé sur une épaisseur suffisante pour que toute l'épaisseur de la couche mince superficielle soit concernée;
- un deuxième étape consistant à collecter tout ou partie du rayonnement thermique émis par la surface dudit matériau (140) ;
- une troisième étape consistant à mesurer au moins une partie de dudit rayonnement thermique à l'aide d'un capteur (15) ;
- une quatrième étape consistant en la détermination de l'évolution de la température de la surface de la couche superficielle (140) à partir du rayonnement thermique mesuré par ledit capteur (15) et traité par un système d'acquisition et de traitement du signal (18);
- et une cinquième étape consistant à analyser des régimes temporels prédéterminés en comparant les mesures acquises par le système d'acquisition et de traitement du signal (18) avec des valeurs théoriques données par l'équation de la chaleur adaptée aux caractéristiques physiques dudit matériau (14), et en faisant correspondre ces deux séries de valeurs en faisant varier au moins un paramètre physique associé au dit matériau (14), le dit paramètre physique étant l'épaisseur de la couche superficielle (140), sa conductivité thermique, la résistance thermique entre deux couches de matériaux, le coefficient d'absorption et/ou la densité de ladite couche superficielle (140),de manière à en dériver des propriétés thermo-physiques prédéterminées permettant ladite caractérisation de la couche superficielle (140).

2. Procédé selon la revendication 1, **caractérisé en ce que** ladite couche superficielle (140) a une épaisseur située entre 0,1 *µ*m et 900 *µ*m.

3. Procédé selon la revendication 2, **caractérisé en ce que** ladite fréquence de répétition desdites impulsions laser (*tir*₁ - *tir*₁₀) est comprise entre 1 kHz et 30 kHz.

4. Procédé selon la revendication 3, **caractérisé en ce que** ladite fréquence de répétition desdites impulsions laser (*tir*₁ *- tir*₁₀) est 10 kHz et la dite durée est égale à 90 ns.

5. Procédé selon l'une quelconque des revendications 1 à 4, **caractérisé en ce que** la température moyenne atteinte par ladite couche superficielle (140) s'élève progressivement au fur et à mesure desdits cycles thermiques par l'effet de ladite accumulation de température et **en ce que** ladite salve d'impulsions lasers (*tir*₁ *- tir*₁₀) comprend un nombre suffisant d'impulsions successives pour obtenir une saturation de ladite température moyenne.

6. Procédé selon l'une quelconque des revendications 1 à 5, **caractérisé en ce que** ladite analyse de régimes temporels prédéterminés de chauffage et de refroidissement de la dite couche superficielle (140) pendant ladite cinquième étape consiste en la mesure et l'évaluation de l'élévation moyenne de sa température, de l'évolution temporelle de la température lors du chauffage lors de chaque cycle thermique ou sélectivement pour des cycles thermiques déterminés, de la valeur de la température moyenne maximale atteinte, de la valeur de la température maximale atteinte (*Tmaxᵢ*) pour chaque cycle thermique ou sélectivement pour des cycles thermiques déterminés, de la valeur de la température atteinte juste avant chaque impulsion laser (*tir*₁ *- tir*₁₀) ou sélectivement avant des impulsions laser déterminés, de la valeur de la température à un ou plusieurs délais temporels prédéfinis entre deux impulsions laser par rapport à l'impulsion laser précédente, de l'évolution temporelle de la température entre deux impulsions laser, de l'évolution temporelle de la température après la fin de ladite salve d'impulsions laser (*tir*₁ - *tir*₁₀), et/ou de la valeur de la température atteinte à un ou plusieurs délais prédéterminés après ladite salve d'impulsions laser (*tir*₁ - *tir*₁₀).

7. Procédé selon l'une quelconque des revendications 1 à 6, **caractérisé en ce que** lesdites valeurs théoriques pour la comparaison effectué pendant ladite cinquième étape sont obtenues par un processus de modélisation numérique.

8. Procédé selon la revendication 7, **caractérisé en ce que** ladite modélisation numérique est effectuée à l'aide du logiciel de calcul MATLAB^{®}.

9. Dispositif pour la mise en oeuvre du procédé de caractérisation d'un bloc (14) de matériau selon l'une quelconque des revendications 1 à 8, **caractérisé en ce qu'**il comprend au moins une source de chaleur comprenant un laser (10) générant des impulsions à une longueur d'onde déterminée, à ladite fréquence de répétition élevée, des moyens optiques (12, 13) pour transmettre lesdites impulsions laser et exposer tout ou partie (*Z_{TH}*) de la surface de ladite couche superficielle (140), de manière à ce que le matériau soit chauffé sur une épaisseur suffisante pour que toute l'épaisseur de la couche mince superficielle soit concernée, des moyens optiques (16, 17) pour collecter au moins une partie du rayonnement émis par la surface de ladite couche superficielle de matériau (140), un capteur (15) pour la mesure d'au moins une partie dudit rayonnement collecté et leur conversion en signaux électriques (*Vs*), et des moyens d'acquisition et de traitement de données, (18) recevant lesdits signaux convertis (*Vs*) permettant de déterminer l'évolution de la température et les comparant à des valeurs théoriques de manière à en dériver lesdites propriétés thermo-physiques prédéterminées permettant ladite caractérisation de la couche superficielle.

10. Dispositif selon la revendication 9, **caractérisé en ce que** ledit laser (10) est un laser de type « Nd : YAG », pompé par diodes.

11. Dispositif selon la revendication 10, **caractérisé en ce que** ledit laser (10) est associé à un cristal non-linéaire de KTP, de manière à doubler la fréquence émise, de manière à que sa longueur d'onde soit égale à 532 nm.

12. Dispositif selon l'une quelconque des revendications 9 à 11, **caractérisé en ce que** lesdits moyens optiques pour transmettre lesdites impulsions laser et exposer tout ou partie de la surface de ladite couche superficielle de matériau (140) comprennent une fibre optique multimode (12) couplée en sortie à un organe optique de focalisation comprenant au moins une lentille optique (13) projetant lesdites impulsions laser sur la surface de ladite couche superficielle de matériau (140).

13. Dispositif selon la revendication 12, **caractérisé en ce que** ledit organe optique de focalisation (13) est confondu avec ladite lentille optique (17) et est un organe de type galvanométrique mû par un moteur (19) de manière à balayer le faisceau sur la surface de ladite couche superficielle (140).

14. Dispositif selon l'une quelconque des revendications 9 à 13, **caractérisé en ce que** lesdits moyens optiques pour collecter au moins une partie du rayonnement émis par la surface de ladite couche superficielle de matériau comprennent une lentille optique (17) recevant tout ou partie du rayonnement émis par ladite couche de matériau superficielle (140) et **en ce que** ladite lentille (17) est couplée à une fibre optique (16) véhiculant le rayonnement collecté vers ledit capteur (15).

15. Dispositif selon l'une quelconque des revendications 9 à 13, **caractérisé en ce que** lesdits capteur (15) et système d'acquisition et de traitement du signal (18) sont constitués par un pyromètre muni d'un objectif recevant tout ou partie du rayonnement émis par ladite couche superficielle de matériau (140).

16. Dispositif selon la revendication 15, **caractérisé en ce que** ledit pyromètre est un pyromètre de type dit multicanaux, de manière à s'affranchir de l'émissivité propre dudit matériau (140).

17. Dispositif selon l'une quelconque des revendications 9 à 16, **caractérisé en ce que** lesdits moyens d'acquisition et de traitement de données sont constitués par un système informatique (18) à programme enregistré, muni de cartes spécifiques d'acquisition recevant les signaux électriques (*Vs*) convertis par ledit capteur (15).

18. Dispositif selon l'une quelconque des revendications 9 à 17, **caractérisé en ce que** ledit matériau (14) se déplace par rapport à un ensemble constitué dudit organe optique de focalisation comprenant au moins une lentille (13) et de ladite lentille optique (17), de manière à effectuer une cartographie des propriétés thermo-physiques de ladite couche superficielle (140).

## Patentansprüche

1. Verfahren zur Charakterisierung eines Materialblocks (14) durch aktive Pyrometrie, wobei der Materialblock wenigstens zwei übereinanderliegende Schichten umfasst, eine Oberflächenschicht (140) von geringer Dicke, die auf einem dicken Substrat (141) angeordnet ist, wobei die Oberflächenschicht auf eine bestimmte Anfangstemperatur gebracht wird, **dadurch gekennzeichnet, dass** es wenigstens die folgenden Schritte umfasst:
- einen ersten Schritt, der darin besteht, wenigstens einen bestimmten Bereich der Oberfläche der Oberflächenmaterialschicht (140) mithilfe einer Salve von Laserimpulsen (*tir*₁ - *tir*₁₀) zu erwärmen, wobei die Wiederholfrequenz der Laserimpulse (*tir₁* - *tir*₁₀) ausreichend hoch und ihre Dauer ausreichend kurz dafür gewählt wird, dass das Material der Oberflächenschicht (140) mehreren Temperaturzyklen ausgesetzt wird, die in einer schnellen Erhöhung der Temperatur bestehen, wenn es den Laserimpulsen (*tir₁ - tir*₁₀) ausgesetzt wird, gefolgt von einer langsamen Abnahme der Temperatur zwischen zwei Laserimpulsen, die es nicht gestattet, zur Anfangstemperatur zurückzukehren, und dafür, dass es von einem Temperaturzyklus zum nächsten Wärme akkumuliert, derart, dass das Material auf einer Dicke erwärmt wird, die ausreichend dafür ist, dass die gesamte Dicke der dünnen Oberflächenschicht betroffen ist;
- einen zweiten Schritt, der darin besteht, die gesamte von der Oberfläche des Materials (140) ausgesendete Wärmestrahlung oder einen Teil davon zu sammeln;
- einen dritten Schritt, der darin besteht, wenigstens einen Teil dieser Wärmestrahlung mithilfe eines Sensors (15) zu messen;
- einen vierten Schritt, der in der Bestimmung der Änderung der Temperatur der Oberfläche der Oberflächenschicht (140) aus der Wärmestrahlung, die von dem Sensor (15) gemessen und von einem System zur Erfassung und Verarbeitung des Signals (18) verarbeitet wird, besteht;
- und einen fünften Schritt, der darin besteht, vorbestimmte zeitliche Abläufe zu analysieren, indem die Messwerte, die von dem System zur Erfassung und Verarbeitung des Signals (18) erfasst werden, mit theoretischen Werten verglichen werden, die durch die an die physikalischen Kenngrößen des Materials (14) angepasste Gleichung der Wärme gegeben sind, und indem bewirkt wird, dass diese beiden Reihen von Werten einander entsprechen, indem wenigstens einer dem Material (14) zugeordneter physikalischer Parameter variieren gelassen wird, wobei dieser physikalische Parameter die Dicke der Oberflächenschicht (140), ihre spezifische Wärmeleitfähigkeit, der Wärmewiderstand zwischen zwei Materialschichten, der Absorptionskoeffizient und/oder die Dichte der Oberflächenschicht (140) ist, um daraus vorbestimmte thermophysikalische Eigenschaften abzuleiten, welche die Charakterisierung der Oberflächenschicht (140) ermöglichen.

2. Verfahren nach Anspruch 1, **dadurch gekennzeichnet, dass** die Oberflächenschicht (140) eine Dicke aufweist, die zwischen 0,1 µm und 900 µm liegt.

3. Verfahren nach Anspruch 2, **dadurch gekennzeichnet, dass** die Wiederholfrequenz der Laserimpulse (*tir₁ - tir*₁₀) zwischen 1 kHz und 30 kHz liegt.

4. Verfahren nach Anspruch 3, **dadurch gekennzeichnet, dass** die Wiederholfrequenz der Laserimpulse (*tir₁ - tir*₁₀) 10 kHz beträgt und die Dauer gleich 90 ns ist.

5. Verfahren nach einem der Ansprüche 1 bis 4, **dadurch gekennzeichnet, dass** sich die von der Oberflächenschicht (140) erreichte mittlere Temperatur im Verlauf der Temperaturzyklen durch die Wirkung der Akkumulation von Wärme allmählich erhöht, und dadurch, dass die Salve von Laserimpulsen (*tir*₁ *- tir*₁₀) eine ausreichende Anzahl von aufeinander folgenden Impulsen umfasst, um eine Sättigung der mittleren Temperatur zu erzielen.

6. Verfahren nach einem der Ansprüche 1 bis 5, **dadurch gekennzeichnet, dass** die Analyse vorbestimmter zeitlicher Abläufe von Erwärmung und Abkühlung der Oberflächenschicht (140) während des fünften Schrittes in der Messung und der Auswertung der mittleren Erhöhung ihrer Temperatur, der zeitlichen Änderung der Temperatur während der Erwärmung während jedes Temperaturzyklus oder selektiv für bestimmte Temperaturzyklen, des Wertes der erreichten maximalen mittleren Temperatur, des Wertes der erreichten maximalen Temperatur (*Tmaxᵢ*) für jeden Temperaturzyklus oder selektiv für bestimmte Temperaturzyklen, des Wertes der erreichten Temperatur unmittelbar vor jedem Laserimpuls (*tir₁*
- *tir*₁₀) oder selektiv vor bestimmten Laserimpulsen, des Wertes der Temperatur bei einer oder mehreren vordefinierten zeitlichen Verzögerungen zwischen zwei Laserimpulsen bezüglich des vorhergehenden Laserimpulses, der zeitlichen Änderung der Temperatur zwischen zwei Laserimpulsen, der zeitlichen Änderung der Temperatur nach dem Ende der Salve von Laserimpulsen (*tir*₁ *- tir*₁₀) und/oder des Wertes der erreichten Temperatur bei einer oder mehreren vorbestimmten Verzögerungen nach der Salve von Laserimpulsen (*tir₁ - tir*₁₀) besteht.

7. Verfahren nach einem der Ansprüche 1 bis 6, **dadurch gekennzeichnet, dass** die theoretischen Werte für den während des fünften Schrittes durchgeführten Vergleich durch einen Prozess der numerischen Modellierung gewonnen werden.

8. Verfahren nach Anspruch 7, **dadurch gekennzeichnet, dass** die numerische Modellierung mithilfe der Berechnungssoftware MATLAB^{®} durchgeführt wird.

9. Vorrichtung zur Durchführung des Verfahrens zur Charakterisierung eines Materialblocks (14) nach einem der Ansprüche 1 bis 8, **dadurch gekennzeichnet, dass** sie umfasst: wenigstens eine Wärmequelle, die einen Laser (10) umfasst, der Impulse mit einer bestimmten Wellenlänge mit der erhöhten Wiederholfrequenz erzeugt, optische Mittel (12, 13) zum Übertragen der Laserimpulse und Exponieren der gesamten Oberfläche der Oberflächenschicht (140) oder eines Teils (*Z_{TH}*) davon, so dass das Material auf einer Dicke erwärmt wird, die ausreichend dafür ist, dass die gesamte Dicke der dünnen Oberflächenschicht betroffen ist, optische Mittel (16, 17) zum Sammeln wenigstens eines Teils der Strahlung, die von der Oberfläche der Oberflächenmaterialschicht (140) ausgesendet wird, einen Sensor (15) zur Messung wenigstens eines Teils der gesammelten Strahlung und deren Umwandlung in elektrische Signale (*Vₛ*) und Mittel zur Erfassung und Verarbeitung von Daten (18), welche die umgewandelten Signale (*Vₛ*) empfangen, die es ermöglichen, die Änderung der Temperatur zu bestimmen, und sie mit theoretischen Werten vergleichen, um daraus die vorbestimmten thermophysikalische Eigenschaften abzuleiten, welche die Charakterisierung der Oberflächenschicht ermöglichen.

10. Vorrichtung nach Anspruch 9, **dadurch gekennzeichnet, dass** der Laser (10) ein diodengepumpter Laser vom Typ Nd:YAG ist.

11. Vorrichtung nach Anspruch 10, **dadurch gekennzeichnet, dass** der Laser (10) einem nichtlinearen Kristall aus KTP zugeordnet ist, um die ausgesendete Frequenz zu verdoppeln, so dass seine Wellenlänge gleich 532 nm ist.

12. Vorrichtung nach einem der Ansprüche 9 bis 11, **dadurch gekennzeichnet, dass** die optischen Mittel zum Übertragen der Laserimpulse und Exponieren der gesamten Oberfläche der Oberflächenmaterialschicht (140) oder eines Teils davon eine Multimoden-Lichtleitfaser (12) umfassen, die am Ausgang mit einem optischen Fokussierungsorgan gekoppelt ist, das wenigstens eine optische Linse (13) umfasst, welche die Laserimpulse auf die Oberfläche der Oberflächenmaterialschicht (140) projiziert.

13. Vorrichtung nach Anspruch 12, **dadurch gekennzeichnet, dass** das optische Fokussierungsorgan (13) mit der optischen Linse (17) zusammenfällt und ein Organ vom galvanometrischen Typ ist, das von einem Motor (19) so bewegt wird, dass es mit dem Lichtbündel die Oberfläche der Oberflächenschicht (140) abtastet.

14. Vorrichtung nach einem der Ansprüche 9 bis 13, **dadurch gekennzeichnet, dass** die optischen Mittel zum Sammeln wenigstens eines Teils der Strahlung, die von der Oberfläche der Oberflächenmaterialschicht ausgesendet wird, eine optische Linse (17) umfassen, welche die gesamte von der Oberflächenmaterialschicht (140) ausgesendete Strahlung oder einen Teil davon empfängt, und dadurch, dass die Linse (17) mit einer Lichtleitfaser (16) gekoppelt ist, welche die gesammelte Strahlung zu dem Sensor (15) hin leitet.

15. Vorrichtung nach einem der Ansprüche 9 bis 13, **dadurch gekennzeichnet, dass** der Sensor (15) und das System zur Erfassung und Verarbeitung des Signals (18) aus einem Pyrometer bestehen, das mit einem Objektiv versehen ist, welches die gesamte von der Oberflächenmaterialschicht (140) ausgesendete Strahlung oder einen Teil davon empfängt.

16. Vorrichtung nach Anspruch 15, **dadurch gekennzeichnet, dass** das Pyrometer ein sogenanntes Mehrkanalpyrometer ist, um den Einfluss der Eigenemissivität des Materials (140) zu eliminieren.

17. Vorrichtung nach einem der Ansprüche 9 bis 16, **dadurch gekennzeichnet, dass** die Mittel zur Erfassung und Verarbeitung von Daten aus einem Informatiksystem (18) mit einem aufgezeichneten Programm bestehen, das mit speziellen Erfassungskarten versehen ist, welche die von dem Sensor (15) umgewandelten elektrischen Signale (*Vₛ*) empfangen.

18. Vorrichtung nach einem der Ansprüche 9 bis 17, **dadurch gekennzeichnet, dass** sich das Material (14) bezüglich einer Anordnung, die aus dem wenigstens eine Linse (13) umfassenden optischen Fokussierungsorgan und der optischen Linse (17) besteht, bewegt, um eine Kartographie der thermophysikalischen Eigenschaften der Oberflächenschicht (140) durchzuführen.

## Claims

1. Method for obtaining a characterisation of a block (14) of material by active pyrometry, said block of material comprising at least two superposed layers, a superficial layer (140) of small thickness placed on a thick substrate (141), said superficial layer being raised to a set initial temperature, **characterized in that** it comprises at least the following steps:
- a first step consisting in heating at least one set zone of the surface of said superficial layer of material (140) using a salvo of laser pulses (*tir*₁ - *tir₁₀*)*,* the repetition frequency of said laser pulses (*tir₁* - *tir₁₀*) being chosen sufficiently high and their duration sufficiently short that the material of said superficial layer (140) undergoes a plurality of thermal cycles consisting of a rapid rise in temperature when the material is exposed to said laser pulses (*tir₁* - *tir₁₀*)*,* followed by a slow decrease in temperature between two laser pulses, not allowing said initial temperature to be returned to, and that the material accumulates heat from one thermal cycle to the next so that it is heated over a sufficient thickness that all the thickness of the thin superficial layer is concerned;
- a second step consisting in collecting all or some of the thermal radiation emitted by the surface of said material (140);
- a third step consisting in measuring at least some of said thermal radiation using a sensor (15);
- a fourth step consisting in determining the variation in the temperature of the surface of the superficial layer (140) from the thermal radiation measured by said sensor (15) and processed by a system (18) for acquiring and processing the signal;
- and a fifth step consisting in analysing preset time-dependent regimes by comparing the measurements acquired by the system (18) for acquiring and processing the signal with theoretical values given by the heat equation adapted to the physical properties of said material (14), and by making these two series of values correspond by varying at least one physical parameter associated with said material (14), said physical parameter being the thickness of the superficial layer (140), its thermal conductivity, the thermal resistance between two layers of materials, the absorption coefficient and/or the density of said superficial layer (140), so as to derive therefrom preset thermo-physical properties allowing said characterisation of the superficial layer (140).

2. Method according to Claim 1, **characterized in that** said superficial layer (140) has a thickness located between 0.1 µm and 900 µm.

3. Method according to Claim 2, **characterized in that** said repetition frequency of said laser pulses (*tir₁ - tir₁₀*) is comprised between 1 kHz and 30 kHz.

4. Method according to Claim 3, **characterized in that** said repetition frequency of said laser pulses (*tir₁ - tir₁₀*) is 10 kHz and said duration is equal to 90 ns.

5. Method according to any one of Claims 1 to 4, **characterized in that** the average temperature reached by said superficial layer (140) increases gradually over the course of said thermal cycles via the effect of said accumulation of heat and **in that** said salvo of laser pulses (*tir₁ - tir₁₀*) comprises a sufficient number of successive pulses to obtain a saturation of said average temperature.

6. Method according to any one of Claims 1 to 5, **characterized in that** said analysis of preset time-dependent regimes of heating and cooling of said superficial layer (140) in said fifth step consists in measuring and evaluating: the average increase in its temperature, the variation as a function of time of temperature during the heating part of each thermal cycle or selectively for set thermal cycles, the value of the maximum average temperature reached, the value of the maximum temperature (*Tmaxᵢ*) reached in each thermal cycle or selectively for set thermal cycles, the value of the temperature reached just before each laser pulse (*tir₁* - *tir₁₀*) or selectively before set laser pulses, the value of the temperature after one or more predefined time delays between two laser pulses with respect to the preceding laser pulse, the variation as a function of time of temperature between two laser pulses, the variation as a function of time of temperature after the end of said salvo of laser pulses (*tir₁* - *tir₁₀*)*,* and/or the value of the temperature reached after one or more preset delays after said salvo of laser pulses (*tir₁ - tir₁₀*)*.*

7. Method according to any one of Claims 1 to 6, **characterized in that** said theoretical values for the comparison made in said fifth step are obtained by a numerical modelling process.

8. Method according to Claim 7, **characterized in that** said numerical modelling is carried out using the software package MATLAB^{®}.

9. Device for implementing the method for obtaining a characterisation of a block (14) of material according to any one of Claims 1 to 8, **characterized in that** it comprises at least one heat source comprising a laser (10) generating pulses at a set wavelength, at said high repetition frequency, optical means (12, 13) for transmitting said laser pulses and exposing all or some (*Z_{TH}*) of the surface of said superficial layer (140), so that the material is heated over a sufficient thickness that all the thickness of the thin superficial layer is concerned, optical means (16, 17) for collecting at least some of the radiation emitted by the surface of said superficial layer of material (140), a sensor (15) for measuring at least some of said collected radiation and converting it into electrical signals (*Vₛ*), and means (18) for acquiring and processing data, receiving said converted signals (*Vₛ*) allowing the variation in the temperature to be determined and comparing them to theoretical values so as to derive therefrom said preset thermo-physical properties allowing said characterisation of the superficial layer.

10. Device according to Claim 9, **characterized in that** said laser (10) is a diode-pumped Nd:YAG laser.

11. Device according to Claim 10, **characterized in that** said laser (10) is associated with a nonlinear crystal of KTP, so as to double the emitted frequency, so that its wavelength is equal to 532 nm.

12. Device according to any one of Claims 9 to 11, **characterized in that** said optical means for transmitting said laser pulses and exposing all or some of the surface of said superficial layer of material (140) comprise a multimode optical fibre (12) that is coupled to the exit of a focusing optical unit comprising at least one optical lens (13) projecting said laser pulses onto the surface of said superficial layer of material (140).

13. Device according to Claim 12, **characterized in that** said optical lens (17) forms part of said focusing optical unit (13) and is a galvanometric unit actuated by a motor (19) so as to scan the beam over the surface of said superficial layer (140).

14. Device according to any one of Claims 9 to 13, **characterized in that** said optical means for collecting at least some of the radiation emitted by the surface of said superficial layer of material comprise an optical lens (17) receiving all or some of the radiation emitted by said superficial layer of material (140) and **in that** said lens (17) is coupled to an optical fibre (16) conveying the collected radiation to said sensor (15).

15. Device according to any one of Claims 9 to 13, **characterized in that** said sensor (15) and said system (18) for acquiring and processing the signal consist of a pyrometer equipped with an objective receiving all or some of the radiation emitted by said superficial layer of material (140).

16. Device according to Claim 15, **characterized in that** said pyrometer is what is called a multichannel pyrometer, so as to compensate for the actual emissivity of said material (140).

17. Device according to any one of Claims 9 to 16, **characterized in that** said means for acquiring and processing data consist of a computational system (18) containing a stored program, said system being equipped with specific acquiring boards receiving the electrical signals (*Vₛ*) converted by said sensor (15).

18. Device according to any one of Claims 9 to 17, **characterized in that** said material (14) moves with respect to an assembly consisting of said focusing optical unit comprising at least one lens (13) and said optical lens (17), so as to produce a map of the thermo-physical properties of said superficial layer (140).
